# EUROPÄISCHE PATENTSCHRIFT

(11) **EP 3 608 185 B1**
(45) Veröffentlichungstag und Bekanntmachung des Hinweises auf die Patenterteilung: **10.03.2021**
(21) Anmeldenummer: 19184334.1
(22) Anmeldetag: 04.07.2019
(51) Int. Cl.: B60W 20/16, B60W 10/06, B60W 10/08

(54) **VERFAHREN ZUM BETREIBEN EINER HYBRIDANTRIEBSEINRICHTUNG FÜR EIN KRAFTFAHRZEUG SOWIE ENTSPRECHENDE HYBRIDANTRIEBSEINRICHTUNG**
METHOD FOR OPERATING A HYBRID DRIVE DEVICE FOR A MOTOR VEHICLE AND CORRESPONDING HYBRID DRIVE DEVICE
PROCÉDÉ DE FONCTIONNEMENT D'UN DISPOSITIF D'ENTRAÎNEMENT HYBRIDE POUR UN VÉHICULE AUTOMOBILE AINSI QUE DISPOSITIF D'ENTRAÎNEMENT HYBRIDE CORRESPONDANT

(30) Priorität: 02.08.2018 DE 102018212925
(43) Veröffentlichungstag der Anmeldung: 12.02.2020
(73) Patentinhaber: Audi AG, 85045 Ingolstadt (DE)
(72) Erfinder: Blasinski, Boris, 85080 Gaimersheim (DE); Zink, Florian, 74906 Bad Rappenau (DE); Schimmel, René, 74206 Bad Wimpfen (DE)

(56) Entgegenhaltungen:
- DE-A1-102015 210 295
- US-A1- 2014 024 491
- US-A1- 2015 019 056

## Beschreibung

Die Erfindung betrifft ein Verfahren zum Betreiben einer Hybridantriebseinrichtung für ein Kraftfahrzeug, die eine abgaserzeugende Brennkraftmaschine und eine elektrische Maschine aufweist, wobei die Brennkraftmaschine und die elektrische Maschine jeweils alleine oder zumindest zeitweise gemeinsam ein Antriebsdrehmoment bereitstellen, wobei bei einem Überschreiten eines Startschwellenwerts durch eine Anforderungsgröße die Brennkraftmaschine gestartet und das Antriebsdrehmoment zumindest teilweise mittels der Brennkraftmaschine erzeugt wird, und bei einem Unterschreiten eines Stoppschwellenwerts durch die Anforderungsgröße die Brennkraftmaschine gestoppt und das Antriebsdrehmoment allein mittels der elektrischen Maschine erzeugt wird, und wobei die Hybridantriebseinrichtung über einen Partikelfilter zum Filtern des Abgases der Brennkraftmaschine verfügt. Dabei ist vorgesehen, dass der Startschwellenwert und/oder der Stoppschwellenwert zum Reduzieren einer innermotorischen Rußerzeugung in Abhängigkeit von einer eine Temperatur der Brennkraftmaschine beschreibenden Betriebsgröße variabel gewählt werden. Die Erfindung betrifft weiterhin eine Hybridantriebseinrichtung für ein Kraftfahrzeug.

Aus dem Stand der Technik ist beispielsweise die Druckschrift DE 10 2014 109 880 A1 bekannt. Diese betrifft Verfahren und Systeme für die emissionsverträgliche Verwendung von telematischen Eingangsgrößen bei einem Antriebssteuersystem zur Funktionsumsetzung. Diese Systeme und Verfahren werden bereitgestellt, um eine zuverlässige Ausschöpfung von GPS- und Karteninformationen in einem Steuersystem zu ermöglichen, für einen derartigen Gebrauch zum Verbessern der Off-Zyklusbrennstoffökonomie in einem Plug-in-Hybridfahrzeug mit einem Elektromotor und einer Verbrennungskraftmaschine, die unter Verwendung eines globalen Positionsbestimmungssystems bereitgestellt wird. Das System umfasst ein globales Positionsbestimmungssystem, einen Zeitgeber und einen Prozessor, der eine Funktion, die darin ausgeführt wird, enthält, welche die Verbrennungskraftmaschine basierend auf einer GPS-Standortbestimmung und ihrer Genauigkeitsinformation steuert.

Weiterhin beschreibt die Druckschrift DE 10 2015 015 794 A1 ein Verfahren zum Aufheizen wenigstens einer in einem Abgastrakt eines eine Verbrennungskraftmaschine umfassenden und mittels der Verbrennungskraftmaschine antreibbaren Kraftfahrzeugs angeordneten Abgasnachbehandlungseinrichtung, wobei während Verbrennungen von Kraftstoff in der Verbrennungskraftmaschine unterbleiben, ein zumindest die Abgasnachbehandlungseinrichtung durchströmender Luftstrom bewirkt wird, welcher mittels wenigstens eines elektrischen Heizelements aufgeheizt wird.

Aus dem Stand der Technik ist weiterhin die Druckschrift US 2015/0019056 A1 bekannt. Diese beschreibt ein Verfahren zum Antreiben eines Kraftfahrzeugs mit einem Hybridantrieb, wobei der Hybridantrieb eine Verbrennungskraftmaschine und eine elektrische Maschine aufweist, um ein Antriebsmoment zum Antreiben des Kraftfahrzeugs bereitzustellen, wobei das Kraftfahrzeug entweder durch Starten der Verbrennungskraftmaschine mittels eines Drehmoments der Verbrennungskraftmaschine oder mittels eines Drehmoments der elektrischen Maschine antreibbar ist, wobei eine Laufleistung der Verbrennungskraftmaschine erfasst und die Antriebsart auf Grundlage der erfassten Laufleistung ausgewählt wird.

Weiterhin sind aus dem Stand der Technik die Druckschriften US 2014/024491 A1 und DE 10 2015 210 295 A1 bekannt.

Es ist Aufgabe der Erfindung, ein Verfahren zum Betreiben einer Hybridantriebseinrichtung für ein Kraftfahrzeug vorzuschlagen, welches gegenüber anderen Verfahren Vorteile aufweist, insbesondere die vor allem während eines Warmlaufs der Brennkraftmaschine anfallende Rußmenge deutlich verringert.

Dies wird erfindungsgemäß mit einem Verfahren zum Betreiben einer Hybridantriebseinrichtung mit den Merkmalen des Anspruchs 1 erreicht. Dabei ist vorgesehen, dass bei Unterschreiten eines ersten Sollwerts durch die Betriebsgröße der Startschwellenwert ausgehend von einem Startschwellenausgangswert um einen ersten Startschwellendifferenzwert reduziert wird und/oder dass bei Unterschreiten des ersten Sollwerts durch die Betriebsgröße der Stoppschwellenwert ausgehend von einem Stoppschwellenausgangswert um einen ersten Stoppschwellendifferenzwert reduziert wird.

Grundsätzlich ist vorgesehen, dass der Startschwellenwert und/oder der Stoppschwellenwert zum Reduzieren einer innermotorischen Rußerzeugung in Abhängigkeit von einer eine Temperatur der Brennkraftmaschine beschreibenden Betriebsgröße variabel gewählt werden.

Die Hybridantriebseinrichtung dient dem Antreiben des Kraftfahrzeugs, insoweit also dem Bereitstellen eines auf das Antreiben des Kraftfahrzeugs gerichteten Drehmoments. Die Hybridantriebseinrichtung verfügt über die Brennkraftmaschine sowie die elektrische Maschine. Diese sind dazu vorgesehen und ausgebildet, das von der Hybridantriebseinrichtung gelieferte Antriebsdrehmoment jeweils alleine oder zumindest zeitweise gemeinsam bereitzustellen. Das bedeutet, dass das Antriebsdrehmoment nur von der Brennkraftmaschine und ohne Verwendung der elektrischen Maschine, nur von der elektrischen Maschine und ohne Verwendung der Brennkraftmaschine oder von der Brennkraftmaschine und der elektrischen Maschine gemeinsam bereitgestellt wird.

Eine hinreichende Versorgung mit elektrischer Energie vorausgesetzt, beispielsweise bei Vorliegen eines hinreichenden Ladestands eines elektrischen Energiespeichers, soll die elektrische Maschine bei geringer Last das Antriebsdrehmoment alleine, also ohne Verwendung der Brennkraftmaschine, liefern. Erst bei einer höheren Last wird die Brennkraftmaschine zugeschaltet, um das Antriebsdrehmoment alleine oder durch Zusammenwirken mit der elektrischen Maschine bereitzustellen. Hierzu ist es vorgesehen, die Brennkraftmaschine zu starten, falls der Startschwellenwert durch die Anforderungsgröße überschritten wird. Umgekehrt wird die Brennkraftmaschine gestoppt, wenn der Stoppschwellenwert durch die Anforderungsgröße unterschritten wird.

Die Anforderungsgröße ist eine an der Hybridantriebseinrichtung eingestellte Größe, insbesondere eine von einem Fahrer des Kraftfahrzeugs und/oder einer Fahrerassistenzeinrichtung des Kraftfahrzeugs vorgegebene Größe. Die Anforderungsgröße beschreibt vorzugsweise die Last oder die zu erwartende Last. Als Anforderungsgröße wird beispielsweise ein angefordertes Antriebsdrehmoment, eine angeforderte Drehzahl und/oder eine angeforderte Leistung der Hybridantriebseinrichtung verwendet. Beispielsweise wird die Anforderungsgröße von dem Fahrer mittels einer Bedieneinrichtung, vorzugsweise einem Gaspedal, festgelegt. Überschreitet die Anforderungsgröße den Startschwellenwert und ist die Brennkraftmaschine gestoppt, so wird davon ausgegangen, dass die elektrische Maschine das der Anforderungsgröße entsprechende Antriebsdrehmoment nicht alleine bereitstellen kann, sondern dass hierzu die Brennkraftmaschine notwendig ist. Entsprechend wird diese gestartet.

Umgekehrt wird bei gestarteter beziehungsweise laufender Brennkraftmaschine und dem Unterschreiten des Stoppschwellenwerts durch die Anforderungsgröße davon ausgegangen, dass das der Anforderungsgröße entsprechende Antriebsdrehmoment auch allein mittels der elektrischen Maschine bereitgestellt werden kann, sodass die Brennkraftmaschine hierzu nicht notwendig ist. Diese wird daher gestoppt, um einen möglichst geringen Kraftstoffverbrauch und geringe Emissionswerte der Antriebseinrichtung zu realisieren, zumindest sofern eine hinreichende Versorgung der elektrischen Maschine mit elektrischer Energie gewährleistet ist.

Der Startschwellenwert und der Stoppschwellenwert können grundsätzlich beliebig gewählt sein. Der Stoppschwellenwert kann dem Startschwellenwert entsprechen oder von diesem verschieden sein. Besonders bevorzugt ist der Stoppschwellenwert kleiner als der Startschwellenwert, sodass ein hystereseartiges Verhalten der Hybridantriebseinrichtung erzielt wird, weil die Brennkraftmaschine bei dem Überschreiten des größeren Startschwellenwerts gestartet und erst bei Unterschreiten des kleineren Stoppschwellenwerts wieder gestoppt wird. Der Stoppschwellenwert kann jedoch auch dem Startschwellenwert entsprechen.

Unter dem Starten der Brennkraftmaschine ist ein Vorgang zu verstehen, bei welchem die Brennkraftmaschine derart eingestellt wird, dass sie nachfolgend zumindest einen Teil des Antriebsdrehmoments bereitstellen kann beziehungsweise bereitstellt. Hierzu wird die Brennkraftmaschine zunächst auf eine von Null verschiedene Drehzahl gebracht, insbesondere auf eine Drehzahl, welche zumindest einer Mindestdrehzahl und/oder einer Leerlaufdrehzahl der Brennkraftmaschine entspricht.

Die Mindestdrehzahl ist diejenige Drehzahl, ab welcher die Brennkraftmaschine selbsttätig, also ohne einen externen Antrieb, beispielsweise durch einen Starter, ihre Drehzahl weiter erhöhen kann. Die Leerlaufdrehzahl ist diejenige Drehzahl, bei welcher die Brennkraftmaschine betrieben wird, wenn sie kein Antriebsdrehmoment bereitstellt, sondern lediglich ihre Drehzahl halten soll. Die Leerlaufdrehzahl ist bevorzugt für einen leisen und/oder vibrationsarmen Lauf der Brennkraftmaschine gewählt. Die Leerlaufdrehzahl ist vorzugsweise größer als die Mindestdrehzahl.

Unter dem Stoppen der Brennkraftmaschine ist hingegen eine Reduzierung der Drehzahl der Brennkraftmaschine bis unter die Leerlaufdrehzahl und/oder die Mindestdrehzahl zu verstehen. Besonders bevorzugt wird die Drehzahl der Brennkraftmaschine bei dem Stoppen bis auf Null verändert, sodass die Brennkraftmaschine nach dem Stoppen tatsächlich steht, also eine Drehzahl von Null aufweist.

Die Hybridantriebseinrichtung verfügt über den Partikelfilter, welcher zum Filtern des Abgases der Brennkraftmaschine vorgesehen und ausgebildet ist. Besonders bevorzugt wird dem Partikelfilter das gesamte von der Brennkraftmaschine erzeugte Abgas zugeführt. Der Partikelfilter dient dem Ausfiltern von in dem Abgas enthaltenen Partikeln, insbesondere Rußpartikeln. Die Partikel, insbesondere die Rußpartikel, entstehen in der Brennkraftmaschine durch die Verbrennung von Kraftstoff. Während des Betriebs der Brennkraftmaschine nimmt die Rußbeladung des Partikelfilters der Brennkraftmaschine mit der Zeit zu. Es ist daher notwendig, die in dem Partikelfilter vorliegenden Partikel von Zeit zu Zeit auszutragen. Hierzu erfolgt eine Regeneration des Partikelfilters, während welcher die in dem Partikelfilter vorliegenden Partikel verbrannt beziehungsweise oxidiert werden.

Bei der Regeneration werden die Partikel zumindest teilweise in Asche umgesetzt. Die Asche verbleibt in dem Partikelfilter. Zusätzlich kann Asche in den Partikelfilter eingetragen werden, welche durch eine Verbrennung eines Schmiermittels in der Brennkraftmaschine entsteht. Die Filtrationsleistung des Partikelfilters hängt maßgeblich von seiner Beladung mit Partikeln und/oder Asche ab. Je höher die Beladung ist, also umso mehr Partikel und/oder Asche in dem Partikelfilter vorliegen, umso höher ist die Filtrationsleistung.

Eine besondere Herausforderung ergibt sich somit insbesondere für neue, insbesondere fabrikneue Partikelfilter, in welchen lediglich eine geringe Menge an Partikeln und/oder Asche vorliegt. Entsprechendes gilt für den Partikelfilter nach dem Regenerieren. Bei geringer Beladung des Partikelfilters mit Partikeln und/oder Asche kann es vorkommen, dass ein Teil der in dem Abgas enthaltenen Partikel nicht ausgefiltert wird, sondern durch den Partikelfilter hindurchgelangt. Dies ist jedoch unerwünscht. Besonders problematisch ist eine solche niedrige Filtrationsleistung während eines Warmlaufbetriebs der Brennkraftmaschine, bei dem innermotorisch besonders viele Partikel entstehen. In diesem Warmlaufbetrieb ist die Partikelemission der Hybridantriebseinrichtung insgesamt also besonders hoch.

Unter dem Warmlaufbetrieb ist ein Betrieb der Brennkraftmaschine zu verstehen, während welchem die Brennkraftmaschine eine Temperatur aufweist, die kleiner ist als ihre Betriebstemperatur. Sobald die Temperatur die Betriebstemperatur erreicht, ist der Warmlaufbetrieb beendet. Beispielsweise schließt sich mit dem Erreichen der Betriebstemperatur ein Normalbetrieb an den Warmlaufbetrieb an, während dem die Temperatur zumindest der Betriebstemperatur entspricht und idealerweise konstant gehalten wird.

Von besonderer Bedeutung ist die beschriebene Thematik für die Hybridantriebseinrichtung, weil dort die Brennkraftmaschine zumindest zeitweise auch während eines Fahrbetriebs des Kraftfahrzeugs, also während sich das Kraftfahrzeug bewegt, still steht und das zum Antreiben des Kraftfahrzeugs benötigte Antriebsdrehmoment allein mittels der elektrischen Maschine bereitgestellt wird. Während des Stillstands der Brennkraftmaschine kühlt diese ab, sodass bei einem Start beziehungsweise Wiederstart der Brennkraftmaschine diese erneut eine hohe Partikelemission aufweist, welche sich trotz des Partikelfilters auf die Partikelemissionen der Hybridantriebseinrichtung auswirken.

Aus diesem Grund ist es nun vorgesehen, den Startschwellenwert und/oder den Stoppschwellenwert derart anzupassen, dass die innermotorische Rußerzeugung reduziert wird. Unter der innermotorischen Rußerzeugung ist die Erzeugung von Ruß in der Brennkraftmaschine während ihres Betriebs aufgrund der Verbrennung von Kraftstoff zu verstehen. Je mehr Ruß innermotorisch erzeugt wird, umso stärker wird der Partikelfilter mit Partikeln beaufschlagt und umso mehr Partikel können aufgrund der vorstehend beschriebenen geringen Filtrationsleistung durch den Partikelfilter hindurch gelangen und in eine Außenumgebung der Hybridantriebseinrichtung eintreten.

Der Startschwellenwert und/oder der Stoppschwellenwert werden derart gewählt, dass die Temperatur der Brennkraftmaschine idealerweise in einem Bereich gehalten wird, in welchem die innermotorische Rußerzeugung vergleichsweise gering ist. Hierzu werden der Startschwellenwert und/oder der Stoppschwellenwert in Abhängigkeit von der Betriebsgröße variabel gewählt.

Die Betriebsgröße beschreibt wiederum die Temperatur der Brennkraftmaschine oder entspricht dieser. Grundsätzlich kann es vorgesehen sein, den Startschwellenwert, nicht jedoch den Stoppschwellenwert, den Stoppschwellenwert, nicht jedoch den Startschwellenwert, oder sowohl den Startschwellenwert als auch den Stoppschwellenwert in Abhängigkeit von der Betriebsgröße variabel zu wählen.

Unter dem variablen Wählen ist zu verstehen, dass der entsprechende Schwellenwert sich mit der Betriebsgröße verändert. Der Schwellenwert weist also bei einem ersten Wert der Betriebsgröße einen ersten Wert und bei einem zweiten Wert der Betriebsgröße einen zweiten Wert auf. Hierbei sind der erste Wert und der zweite Wert der Betriebsgröße voneinander verschieden und ebenso der erste Wert und der zweite Wert des jeweiligen Schwellenwerts. Durch die beschriebene Vorgehensweise wird die Temperatur der Brennkraftmaschine soweit möglich in einem Bereich gehalten, in welchem die Rußemission der gesamten Hybridantriebseinrichtung bei dem Start beziehungsweise Wiederstart der Brennkraftmaschine gegenüber bekannten Vorgehensweisen deutlich reduziert ist. Beispielsweise werden der Startschwellenwert und/oder der Stoppschwellenwert derart gewählt, dass die Temperatur der Brennkraftmaschine stets mindestens 50 %, mindestens 60 %, mindestens 70 % oder mindestens 75 % einer Betriebstemperatur der Brennkraftmaschine entspricht, auf welche die Brennkraftmaschine während ihres Betriebs geregelt wird.

Eine weitere Ausgestaltung der Erfindung sieht vor, dass als Anforderungsgröße eine Leistung der Hybridantriebseinrichtung, eine Drehzahl der Hybridantriebseinrichtung, ein Drehmoment der Hybridantriebseinrichtung und/oder eine Geschwindigkeit des Kraftfahrzeugs verwendet werden. Unter der Anforderungsgröße ist insbesondere eine Größe zu verstehen, die von dem Fahrer des Kraftfahrzeugs beziehungsweise der Fahrerassistenzeinrichtung des Kraftfahrzeugs angefordert wird. Beispielsweise wird eine der genannten Größen oder eine Kombination zumindest eines Teils oder aller der genannten Größen als Anforderungsgröße herangezogen. Die Anforderungsgröße wird beispielsweise mittels eines entsprechenden Eingabegeräts von dem Fahrer des Kraftfahrzeugs festgelegt, beispielsweise mittels des bereits erwähnten Gaspedals. Die Verwendung einer der genannten Größen oder einer Kombination mehrerer der genannten Größen, insbesondere aller der genannten Größen, als Anforderungsgröße hat den Vorteil, dass die Reduzierung der innermotorischen Rußerzeugung auf besonders einfache und effektive Art und Weise erfolgt.

Im Rahmen einer weiteren Ausführungsform der Erfindung kann vorgesehen sein, dass als Betriebsgröße eine Kühlmitteltemperatur, eine Schmiermitteltemperatur, eine Zylinderwandtemperatur, eine Kolbentemperatur und/oder ein Frischgasdurchsatz der Brennkraftmaschine verwendet werden. Anhand der Betriebsgröße beziehungsweise anhand eines momentanen Werts der Betriebsgröße werden der Startschwellenwert und/oder der Stoppschwellenwert variabel gewählt. Die Betriebsgröße steht zumindest indirekt, vorzugsweise jedoch direkt, in Verbindung mit der Temperatur der Brennkraftmaschine. Beispielsweise kommt als Betriebsgröße die Kühlmitteltemperatur, die Schmiermitteltemperatur, die Zylinderwandtemperatur oder die Kolbentemperatur zum Einsatz.

Die Kühlmitteltemperatur beschreibt die momentane Temperatur eines Kühlmittels, welches zum Kühlen der Brennkraftmaschine verwendet wird. Beispielsweise liegt das Kühlmittel in einem Kühlmittelkreislauf der Brennkraftmaschine vor. Vorzugsweise wird Wasser als Kühlmittel verwendet, sodass das Kühlmittel auch als Kühlwasser bezeichnet werden kann. Die Schmiermitteltemperatur bezeichnet die momentane Temperatur eines Schmiermittels, welches zum Betreiben der Brennkraftmaschine verwendet wird. Das Schmiermittel dient einer Schmierung der Brennkraftmaschine während ihres Betriebs. Vorzugsweise wird Öl als Schmiermittel verwendet.

Die Zylinderwandtemperatur beschreibt die momentane Temperatur einer Zylinderwand, welche wenigstens einen Brennraum eines Zylinders der Brennkraftmaschine begrenzt, vorzugsweise zusammen mit einem Kolben und/oder einem Zylinderdach, welches vorzugsweise von einem Zylinderkopf der Brennkraftmaschine gebildet ist. Die Kolbentemperatur beschreibt die momentane Temperatur des Kolbens, welcher den Brennraum zumindest bereichsweise begrenzt. Die genannten Temperaturen können jeweils entweder gemessen und/oder modelliert werden. In ersterem Fall erfolgt das Messen der jeweiligen Temperatur mittels eines Temperatursensors. In letzterem Fall wird die Temperatur mithilfe eines Modells ermittelt.

Zusätzlich oder alternativ zu einer der Temperaturen kann der Frischgasdurchsatz der Brennkraftmaschine als Betriebsgröße herangezogen werden. Unter dem Frischgasdurchsatz ist die Menge eines Frischgases pro Zeiteinheit zu verstehen, welche der Brennkraftmaschine, insbesondere dem wenigstens einen Brennraum der Brennkraftmaschine, während ihres Betriebs pro Zeiteinheit zugeführt wird. Das Frischgas ist beispielsweise Frischluft oder - im Falle einer Abgasrückführung - ein Frischluft-Abgas-Gemisch. Die Verwendung einer der genannten Betriebsgrößen oder einer Kombination der genannten Betriebsgrößen ermöglicht ein besonders genaues Einstellen des Startschwellenwerts und/oder des Stoppschwellenwerts derart, dass die innermotorische Rußerzeugung reduziert wird.

Eine vorteilhafte Ausgestaltung der Erfindung sieht vor, dass das Wählen des Startschwellenwerts und/oder des Stoppschwellenwerts stufenlos oder diskret erfolgt. Im Falle des stufenlosen Wählens ist beispielsweise eine direkte mathematische Abhängigkeit zwischen dem jeweiligen Schwellenwert und der Betriebsgröße vorgesehen. In anderen Worten wird der Schwellenwert unmittelbar aus der Betriebsgröße bestimmt, nämlich beispielsweise mithilfe der mathematischen Beziehung. Jede Veränderung der Betriebsgröße, unabhängig von ihrem Ausmaß, führt insoweit zu einer Veränderung des jeweiligen Schwellenwerts.

Dies ist für das diskrete Wählen des Startschwellenwerts und/oder des Stoppschwellenwerts nicht der Fall. Hierbei ist es beispielsweise vorgesehen, dass mehrere Betriebsgrößenbereiche festgelegt sind, welchen jeweils ein Wert des Startschwellenwerts und/oder des Stoppschwellenwerts zugeordnet sind. Liegt die Betriebsgröße beziehungsweise ihr Wert in dem jeweiligen Betriebsgrößenbereich, so wird der Startschwellenwert beziehungsweise der Stoppschwellenwert auf den diesem Betriebsgrößenbereich zugeordneten Wert gesetzt. Eine Änderung des Schwellenwerts erfolgt lediglich bei einem Wechsel zwischen den Betriebsgrößenbereichen durch die Betriebsgröße beziehungsweise ihrem Wert. Das stufenlose Wählen ermöglicht eine besonders hohe Genauigkeit, wohingegen das diskrete Wählen sehr einfach umsetzbar ist.

Eine weitere Ausführungsform der Erfindung sieht vor, dass bei dem stufenlosen Wählen der Startschwellenwert und/oder Stoppschwellenwert anhand einer mathematischen Funktion ermittelt wird, die die Betriebsgröße als Eingangsgröße aufweist. Die mathematische Funktion stellt eine Beziehung zwischen dem jeweiligen Schwellenwert und der Betriebsgröße her. Die Betriebsgröße dient als Eingangsgröße, insbesondere als einzige Eingangsgröße, wohingegen der jeweilige Schwellenwert als Ausgangsgröße der mathematischen Funktion vorliegt. Dies ermöglicht ein besonders genaues Wählen des jeweiligen Schwellenwerts.

Die Erfindung sieht vor, dass bei Unterschreiten eines ersten Sollwerts durch die Betriebsgröße der Startschwellenwert ausgehend von einem Startschwellenausgangswert um einen ersten Startschwellendifferenzwert reduziert wird und/oder dass bei Unterschreiten des ersten Sollwerts durch die Betriebsgröße der Stoppschwellenwert ausgehend von einem Stoppschwellenausgangswert um einen ersten Stoppschwellendifferenzwert reduziert wird. Für den jeweiligen Schwellenwert ist insoweit ein Schwellenausgangswert festgelegt, nämlich für den Startschwellenwert der Startschwellenausgangswert und für den Stoppschwellenwert der Stoppschwellenausgangswert.

Entspricht die Betriebsgröße zumindest dem ersten Sollwert, so wird der jeweilige Schwellenwert auf den jeweiligen Schwellenausgangswert gesetzt. Ist jedoch die Betriebsgröße kleiner als der erste Sollwert, so wird der jeweilige Schwellenwert kleiner gewählt, nämlich um den jeweiligen ersten Schwellendifferenzwert reduziert. Das bedeutet, dass bei Unterschreiten des ersten Sollwerts durch die Betriebsgröße der Startschwellenwert gleich dem Startwellenausgangswert abzüglich des ersten Startschwellendifferenzwerts und/oder der Stoppschwellenwert gleich dem Stoppschwellenausgangswert abzüglich des ersten Stoppschwellendifferenzwerts ist.

Beispielsweise wird für den Startschwellenwert und den Stoppschwellenwert derselbe erste Sollwert verwendet. Alternativ können jedoch auch unterschiedliche erste Sollwerte herangezogen werden, wobei der erste Sollwert für den Startschwellenwert in diesem Fall als erster Startsollwert und für den Stoppschwellenwert als erster Stoppsollwert bezeichnet werden kann. Zusätzlich oder alternativ können der erste Startschwellendifferenzwert und der erste Stoppschwellendifferenzwert identisch gewählt sein. Vorzugsweise sind sie jedoch voneinander verschieden. Beispielsweise ist der erste Startschwellendifferenzwert kleiner als der erste Stoppschwellendifferenzwert. Die beschriebene Vorgehensweise ermöglicht ein besonders zuverlässiges Reduzieren der innermotorischen Rußerzeugung.

Eine weitere Ausführungsform der Erfindung sieht vor, dass bei Unterschreiten eines zweiten Sollwerts durch die Betriebsgröße der Startschwellenwert ausgehend von dem Startschwellenausgangswert um einen zweiten Startschwellendifferenzwert reduziert wird und/oder dass bei Unterschreiten des zweiten Sollwerts durch die Betriebsgröße der Stoppschwellenwert ausgehend von einem Stoppschwellenausgangswert um einen zweiten Stoppschwellendifferenzwert reduziert wird. Zusätzlich zu dem ersten Sollwert ist insoweit der zweite Sollwert vorgesehen. Der zweite Sollwert ist besonders bevorzugt kleiner als der erste Sollwert.

Zur Modifikation des Startschwellenwerts beziehungsweise des Stoppschwellenwerts wird bei Unterschreiten des zweiten Sollwerts durch die Betriebsgröße der zweite Startwellendifferenzwert beziehungsweise der zweite Stoppschwellendifferenzwert herangezogen. Die Ausführungen für den ersten Sollwert, den ersten Startschwellendifferenzwert und den ersten Stoppschwellendifferenzwert können besonders bevorzugt ergänzend auf analoge Art und Weise herangezogen werden. Die Verwendung des zweiten Sollwerts ermöglicht eine weitere Reduzierung der innermotorischen Rußerzeugung, weil eine besonders feine Abstimmung des jeweiligen Schwellenwerts erfolgt.

Eine weitere besonders bevorzugte Ausgestaltung der Erfindung sieht vor, dass bei Unterschreiten des ersten Sollwerts und/oder des zweiten Sollwerts durch die Betriebsgröße der Startschwellenwert und/oder der Stoppschwellenwert derart gewählt werden, dass das Antriebsdrehmoment allein mittels der Brennkraftmaschine erzeugt wird. Ist der jeweilige Sollwert unterschritten, wird also das Antreiben des Kraftfahrzeugs beziehungsweise das Bereitstellen des Antriebsdrehmoments durch die elektrische Maschine nicht mehr zugelassen. Vielmehr soll das Antriebsdrehmoment allein mittels der Brennkraftmaschine erzeugt werden. Ist lediglich der erste Sollwert, nicht jedoch der zweite Sollwert vorgesehen, so wird die beschriebene Betriebsweise bevorzugt bei Unterschreiten des ersten Sollwerts herangezogen. Liegt hingegen zusätzlich zu dem ersten Sollwert der zweite Sollwert vor, so kommt die Vorgehensweise besonders bevorzugt erst bei Unterschreiten des zweiten Sollwerts durch die Betriebsgröße zum Einsatz.

Schließlich kann im Rahmen einer weiteren Ausführungsform der Erfindung vorgesehen sein, dass als Brennkraftmaschine eine Ottobrennkraftmaschine verwendet wird. Beispielsweise ist die Ottobrennkraftmaschine eine direkteinspritzende Ottobrennkraftmaschine. Bei der Ottobrennkraftmaschine und insbesondere bei der direkteinspritzenden Ottobrennkraftmaschine fällt während des Warmlaufbetriebs eine besonders große Menge an Partikeln, insbesondere Rußpartikeln, an. Entsprechend kann das beschriebene Verfahren besonders vorteilhaft für die Ottobrennkraftmaschine herangezogen werden.

Die Erfindung betrifft weiterhin eine Hybridantriebseinrichtung für ein Kraftfahrzeug, insbesondere zur Durchführung des Verfahrens gemäß den Ausführungen im Rahmen dieser Beschreibung, wobei die Hybridantriebseinrichtung eine abgaserzeugende Brennkraftmaschine und eine elektrische Maschine aufweist, wobei die Brennkraftmaschine und die elektrische Maschine jeweils alleine oder zumindest zeitweise gemeinsam ein Antriebsdrehmoment bereitstellen, wobei die Hybridantriebseinrichtung dazu ausgebildet ist, bei einem Überschreiten eines Startschwellenwerts durch eine Anforderungsgröße die Brennkraftmaschine zu starten und das Antriebsdrehmoment zumindest teilweise mittels der Brennkraftmaschine zu erzeugen, und bei einem Unterschreiten eines Stoppschwellenwerts durch die Anforderungsgröße die Brennkraftmaschine zu stoppen und das Antriebsdrehmoment allein mittels der elektrischen Maschine zu erzeugen, wobei die Hybridantriebseinrichtung über einen Partikelfilter zum Filtern des Abgases der Brennkraftmaschine verfügt. Dabei ist vorgesehen, dass die Hybridantriebseinrichtung weiter dazu ausgebildet ist, den Startschwellenwert und/oder den Stoppschwellenwert zum Reduzieren einer innermotorischen Rußerzeugung in Abhängigkeit von einer eine Temperatur der Brennkraftmaschine beschreibenden Betriebsgröße variabel zu wählen. Weiterhin ist vorgesehen, dass bei Unterschreiten eines ersten Sollwerts durch die Betriebsgröße der Startschwellenwert ausgehend von einem Startschwellenausgangswert um einen ersten Startschwellendifferenzwert reduziert wird und/oder dass bei Unterschreiten des ersten Sollwerts durch die Betriebsgröße der Stoppschwellenwert ausgehend von einem Stoppschwellenausgangswert um einen ersten Stoppschwellendifferenzwert reduziert wird.

Auf die Vorteile einer derartigen Ausgestaltung der Hybridantriebseinrichtung sowie einer derartigen Vorgehensweise wurde bereits hingewiesen. Sowohl die Hybridantriebseinrichtung als auch das Verfahren zu ihrem Betreiben können gemäß den Ausführungen im Rahmen dieser Beschreibung weitergebildet sein, sodass insoweit auf diese verwiesen wird.

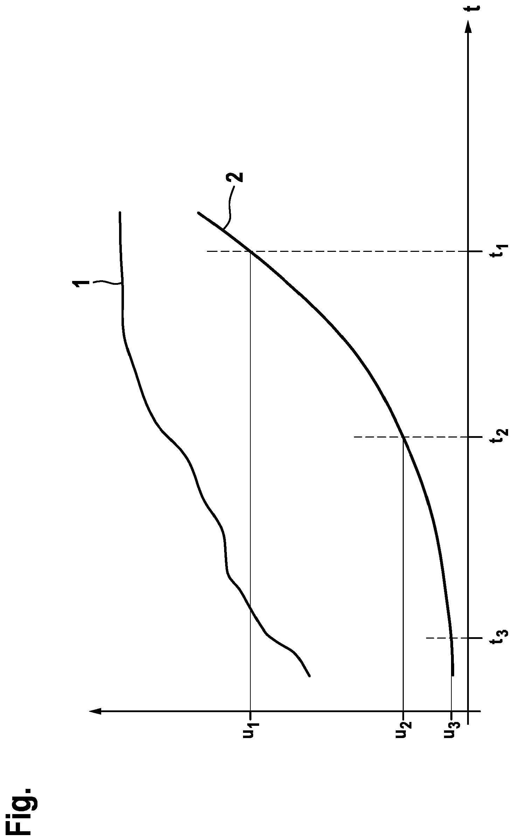

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: ein Diagramm, in welchem Verläufe für eine Geschwindigkeit eines Kraftfahrzeugs sowie eine Leistung einer Hybridantriebseinrichtung über der Zeit rein beispielhaft aufgetragen sind.

Die Figur zeigt ein Diagramm, in welchem rein schematisch und beispielhaft ein Verlauf 1 und ein Verlauf 2 über der Zeit t aufgetragen sind. Der Verlauf 1 beschreibt hierbei eine Leistung einer Hybridantriebseinrichtung und der Verlauf 2 die Geschwindigkeit eines Kraftfahrzeugs, welches mittels der Hybridantriebseinrichtung angetrieben wird. Die Hybridantriebseinrichtung verfügt über eine Brennkraftmaschine und eine elektrische Maschine, welche jeweils allein oder zumindest zeitweise gemeinsam ein Antriebsdrehmoment der Hybridantriebseinrichtung zum Antreiben des Kraftfahrzeugs bereitstellen.

Die Brennkraftmaschine wird während eines Hybridbetriebs der Hybridantriebseinrichtung zumindest zeitweise abgestellt beziehungsweise gestoppt. Insbesondere ist es vorgesehen, die Brennkraftmaschine zu starten und zumindest einen Teil des Antriebsdrehmoments mittels der Brennkraftmaschine zu erzeugen, wenn eine Anforderungsgröße größer ist als ein Startschwellenwert beziehungsweise diesen überschreitet. Ist umgekehrt die Anforderungsgröße kleiner als ein Stoppschwellenwert beziehungsweise unterschreitet diesen, so wird die Brennkraftmaschine gestoppt und das Antriebsdrehmoment allein mittels der elektrischen Maschine erzeugt.

Um eine innermotorische Rußerzeugung bei dem Starten der Brennkraftmaschine so gering wie möglich zu halten, werden der Startschwellenwert und/oder der Stoppschwellenwert in Abhängigkeit von einer Betriebsgröße variabel gewählt, wobei diese Betriebsgröße eine Temperatur der Brennkraftmaschine beschreibt. Das Wählen des Startschwellenwerts beziehungsweise des Stoppschwellenwerts kann stufenlos erfolgen. In dem hier dargestellten Ausführungsbeispiel ist ein diskretes Wählen umgesetzt. Hierzu sind ein erster Sollwert u₁, ein zweiter Sollwert u₂ und ein dritter Sollwert u₃ vorgesehen, welche zu unterschiedlichen Zeitpunkten t₁, t₂ und t₃ vorliegen.

In dem hier dargestellten Ausführungsbeispiel wird die Fahrgeschwindigkeit des Kraftfahrzeugs als Betriebsgröße verwendet; entsprechend beschreiben die Sollwerte u₁, u₂ und u₃ ebenfalls Fahrgeschwindigkeiten. Falls die Betriebsgröße, also die Fahrgeschwindigkeit, den ersten Sollwert u₁ unterschreitet, so wird der Startschwellenwert ausgehend von einem Startschwellenausgangswert um einen ersten Startschwellendifferenzwert reduziert. Zusätzlich oder alternativ wird der Stoppschwellenwert ausgehend von einem Stoppschwellenausgangswert um einen ersten Stoppschwellendifferenzwert reduziert.

Unterschreitet die Betriebsgröße den zweiten Sollwert u₂, so wird der Startschwellenwert ausgehend von dem Startschwellenausgangswert um einen zweiten Startschwellendifferenzwert reduziert, und/oder der Stoppschwellenwert ausgehend von dem Stoppschwellenausgangswert um einen zweiten Stoppstellendifferenzwert reduziert. Zusätzlich kann es vorgesehen sein, dass bei Unterschreiten des dritten Sollwerts u₃ durch die Betriebsgröße der Startschwellenwert ausgehend von dem Startschwellenausgangswert um einen dritten Startschwellendifferenzwert reduziert wird und/oder der Stoppschwellenwert ausgehend von dem Stoppschwellenausgangswert um einen dritten Stoppschwellendifferenzwert reduziert wird.

Hierbei ist der dritte Startschwellendifferenzwert kleiner als der zweite Startschwellendifferenzwert, welcher wiederum kleiner ist als der erste Startschwellendifferenzwert. Zusätzlich oder alternativ ist der dritte Stoppschwellendifferenzwert kleiner als der zweite Stoppschwellendifferenzwert, welcher wiederum kleiner als der erste Stoppschwellendifferenzwert ist. Schlussendlich bedeutet dies, dass der Startschwellenwert und/oder der Stoppschwellenwert umso kleiner gewählt werden, je kleiner die Betriebsgröße beziehungsweise ihr Wert ist. Auf diese Art und Weise kann die innermotorische Rußerzeugung deutlich reduziert werden, weil die Brennkraftmaschine häufiger gestartet wird und/oder nach einem Starten länger in Betrieb bleibt.

## Patentansprüche

1. Verfahren zum Betreiben einer Hybridantriebseinrichtung für ein Kraftfahrzeug, die eine abgaserzeugende Brennkraftmaschine und eine elektrische Maschine aufweist, wobei die Brennkraftmaschine und die elektrische Maschine jeweils alleine oder zumindest zeitweise gemeinsam ein Antriebsdrehmoment bereitstellen, wobei bei einem Überschreiten eines Startschwellenwerts durch eine Anforderungsgröße die Brennkraftmaschine gestartet und das Antriebsdrehmoment zumindest teilweise mittels der Brennkraftmaschine erzeugt wird, und bei einem Unterschreiten eines Stoppschwellenwerts durch die Anforderungsgröße die Brennkraftmaschine gestoppt und das Antriebsdrehmoment allein mittels der elektrischen Maschine erzeugt wird, und wobei die Hybridantriebseinrichtung über einen Partikelfilter zum Filtern des Abgases der Brennkraftmaschine verfügt, wobei der Startschwellenwert und/oder der Stoppschwellenwert zum Reduzieren einer innermotorischen Rußerzeugung in Abhängigkeit von einer eine Temperatur der Brennkraftmaschine beschreibenden Betriebsgröße variabel gewählt werden, **dadurch gekennzeichnet, dass** bei Unterschreiten eines ersten Sollwerts durch die Betriebsgröße der Startschwellenwert ausgehend von einem Startschwellenausgangswert um einen ersten Startschwellendifferenzwert reduziert wird und/oder dass bei Unterschreiten des ersten Sollwerts durch die Betriebsgröße der Stoppschwellenwert ausgehend von einem Stoppschwellenausgangswert um einen ersten Stoppschwellendifferenzwert reduziert wird.

2. Verfahren nach Anspruch 1, **dadurch gekennzeichnet, dass** als Anforderungsgröße eine Leistung der Hybridantriebseinrichtung, eine Drehzahl der Hybridantriebseinrichtung, ein Drehmoment der Hybridantriebseinrichtung und/oder eine Geschwindigkeit des Kraftfahrzeugs verwendet werden.

3. Verfahren nach einem der vorhergehenden Ansprüche, **dadurch gekennzeichnet, dass** als Betriebsgröße eine Kühlmitteltemperatur, eine Schmiermitteltemperatur, eine Zylinderwandtemperatur, eine Kolbentemperatur und/oder ein Frischgasdurchsatz der Brennkraftmaschine verwendet werden.

4. Verfahren nach einem der vorhergehenden Ansprüche, **dadurch gekennzeichnet, dass** das Wählen des Startschwellenwerts und/oder des Stoppschwellenwerts stufenlos oder diskret erfolgt.

5. Verfahren nach einem der vorhergehenden Ansprüche, **dadurch gekennzeichnet, dass** bei dem stufenlosen Wählen der Startschwellenwert und/oder der Stoppschwellenwert anhand einer mathematischen Funktion ermittelt wird, die die Betriebsgröße als Eingangsgröße aufweist.

6. Verfahren nach einem der vorhergehenden Ansprüche, **dadurch gekennzeichnet, dass** bei Unterschreiten eines zweiten Sollwerts durch die Betriebsgröße der Startschwellenwert ausgehend von dem Startschwellenausgangswert um einen zweiten Startschwellendifferenzwert reduziert wird und/oder dass bei Unterschreiten des zweiten Sollwerts durch die Betriebsgröße der Stoppschwellenwert ausgehend von dem Stoppschwellenausgangswert um einen zweiten Stoppschwellendifferenzwert reduziert wird.

7. Verfahren nach einem der vorhergehenden Ansprüche, **dadurch gekennzeichnet, dass** bei Unterschreiten des ersten Sollwerts und/oder des zweiten Sollwerts durch die Betriebsgröße der Startschwellenwert und/oder der Stoppschwellenwert derart gewählt werden, dass das Antriebsdrehmoment allein mittels der Brennkraftmaschine erzeugt wird.

8. Verfahren nach einem der vorhergehenden Ansprüche, **dadurch gekennzeichnet, dass** als Brennkraftmaschine eine Ottobrennkraftmaschine verwendet wird.

9. Hybridantriebseinrichtung für ein Kraftfahrzeug, insbesondere zur Durchführung des Verfahrens nach einem oder mehreren der vorhergehenden Ansprüche, wobei die Hybridantriebseinrichtung eine abgaserzeugende Brennkraftmaschine und eine elektrische Maschine aufweist, wobei die Brennkraftmaschine und die elektrische Maschine jeweils alleine oder zumindest zeitweise gemeinsam ein Antriebsdrehmoment bereitstellen, wobei die Hybridantriebseinrichtung dazu ausgebildet ist, bei einem Überschreiten eines Startschwellenwerts durch eine Anforderungsgröße die Brennkraftmaschine zu starten und das Antriebsdrehmoment zumindest teilweise mittels der Brennkraftmaschine erzeugen, und bei einem Unterschreiten eines Stoppschwellenwerts durch die Anforderungsgröße die Brennkraftmaschine zu stoppen und das Antriebsdrehmoment allein mittels der elektrischen Maschine zu erzeugen, und wobei die Hybridantriebseinrichtung über einen Partikelfilter zum Filtern des Abgases der Brennkraftmaschine verfügt, wobei die Hybridantriebseinrichtung weiter dazu ausgebildet ist, den Startschwellenwert und/oder den Stoppschwellenwert zum Reduzieren einer innermotorischen Rußerzeugung in Abhängigkeit von einer eine Temperatur der Brennkraftmaschine beschreibenden Betriebsgröße variabel zu wählen, **dadurch gekennzeichnet, dass** bei Unterschreiten eines ersten Sollwerts durch die Betriebsgröße der Startschwellenwert ausgehend von einem Startschwellenausgangswert um einen ersten Startschwellendifferenzwert reduziert wird und/oder dass bei Unterschreiten des ersten Sollwerts durch die Betriebsgröße der Stoppschwellenwert ausgehend von einem Stoppschwellenausgangswert um einen ersten Stoppschwellendifferenzwert reduziert wird.

## Claims

1. Method for operating a hybrid drive device for a motor vehicle, which comprises an exhaust generating internal combustion engine and an electric machine, wherein the internal combustion engine and the electric machine each provide a drive torque, alone or at least temporarily together, wherein when a requirement variable exceeds a start threshold value the internal combustion engine is started and the drive torque is generated at least partially by means of the internal combustion engine, and when a requirement variable falls below a stop threshold value, the internal combustion engine is stopped and the drive torque is generated by the electric machine alone, and wherein the hybrid drive device has a particle filter for filtering the exhaust gases of the internal combustion engine, wherein the start threshold value and/or the stop threshold value are selected to be variable as a function of an operating variable describing a temperature of the internal combustion engine in order to reduce soot generation within the engine, **characterised in that** when the operating variable goes below below a first setpoint the start threshold value is reduced by a first start threshold difference value from a start threshold initial value and/or **in that** when the operating variable goes below the first setpoint, the stop threshold value is reduced by a first stop threshold difference value from a stop threshold initial value.

2. Method according to claim 1, **characterised in that** a power of the hybrid drive device, a speed of the hybrid drive device, a torque of the hybrid drive device and/or a speed of the motor vehicle is used as the requirement variable.

3. Method according to according to any of the preceding claims, **characterised in that** a coolant temperature, a lubricant temperature, a cylinder wall temperature, a piston temperature and/or a fresh gas throughput of the internal combustion engine is used as the operating variable.

4. Method according to any of the preceding claims, **characterised in that** the start threshold value and/or the stop threshold value are selected steplessly or discreetly.

5. Method according to any of the preceding claims, **characterised in that** during the stepless selection, the start threshold value and/or the stop threshold value are determined using a mathematical function which has the operating variable as an input variable.

6. Method according to any of the preceding claims, **characterised in that** when the operating variable falls below a second setpoint, the start threshold is reduced by a second start threshold different value from the start threshold initial value and/or when the operational variable falls below the second setpoint, the stop threshold value is reduced by a second stop threshold different value from the stop threshold initial value.

7. Method according to any of the preceding claims, **characterised in that** when the operating variable falls below the first setpoint and/or the second setpoint, the start threshold value and/or the stop threshold value are selected such the drive torque is generated by means of the internal combustion engine alone.

8. Method according to any of the preceding claims, **characterised in that** a petrol engine is used as the internal combustion engine.

9. Hybrid drive device for a motor vehicle, in particular for carrying out the method according to one or more of the preceding claims, wherein the hybrid drive device comprises an exhaust generating internal combustion engine and an electric machine, wherein the internal combustion engine and the electric machine each provide a drive torque, alone or at least temporarily together, wherein the hybrid drive device is designed to start the internal combustion engine when a requirement variable exceeds a start threshold value and to generate the drive torque at least partially by means of the internal combustion engine, and when the requirement variable falls below a stop threshold value, to stop the internal combustion engine and generate the drive torque by means of the electric machine alone, and wherein the hybrid drive device has a particle filter for filtering the exhaust gases of the internal combustion engine, wherein the hybrid drive device is further designed to select the start threshold value and/or the stop threshold value to be variable as a function of an operating variable describing a temperature of the internal combustion engine in order to reduce soot generation within the engine, **characterised in that** when the operating variable falls below a first setpoint the start threshold value is reduced by a first start threshold difference value from a start threshold initial value and/or **in that** when the operating variable falls below the first setpoint, the stop threshold value is reduced by a first stop threshold difference value from a stop threshold initial value.

## Revendications

1. Procédé de fonctionnement d'un appareil d'entraînement hybride pour un véhicule automobile, qui présente un moteur à combustion interne générateur de gaz d'échappement et un moteur électrique, dans lequel le moteur à combustion interne et le moteur électrique fournissent respectivement à eux seuls ou au moins à certains moments ensemble un couple d'entraînement, dans lequel lorsque la variable de demande passe au-dessus d'une valeur seuil de démarrage, le moteur à combustion interne est démarré et le couple d'entraînement est au moins partiellement généré par le moteur à combustion interne, et lorsque la variable de demande passe en dessous d'une valeur seuil d'arrêt, le moteur à combustion interne est arrêté et le couple d'entraînement est généré uniquement au moyen du moteur électrique, et dans lequel l'appareil d'entraînement hybride dispose d'un filtre à particules pour filtrer les gaz d'échappement du moteur à combustion interne, dans lequel la valeur seuil de démarrage et/ou la valeur seuil d'arrêt pour la réduction d'une production de suie de moteur à combustion interne sont choisies de manière variable en fonction d'une variable de fonctionnement décrivant une température du moteur à combustion interne, **caractérisé en ce que** lorsque la variable de fonctionnement passe en dessous d'une première valeur de consigne, la valeur seuil de démarrage est réduite d'une première valeur de différence de seuil de démarrage, à partir d'une valeur de sortie de seuil de démarrage et/ou **en ce que** lorsque la variable de fonctionnement passe en dessous de la première valeur de consigne, la valeur seuil d'arrêt est réduite d'une première valeur de différence de seuil d'arrêt, à partir d'une valeur de sortie de seuil d'arrêt.

2. Procédé selon la revendication 1, **caractérisé en ce qu'**une puissance de l'appareil d'entraînement hybride, une vitesse de rotation de l'appareil d'entraînement hybride, une vitesse de rotation de l'appareil d'entraînement hybride et/ou un couple du véhicule automobile sont utilisés comme variables de demande.

3. Procédé selon l'une quelconque des revendications précédentes, **caractérisé en ce qu'**une température de liquide de refroidissement, une température de lubrifiant, une température de paroi de cylindre, une température de piston et/ou un débit de gaz frais du moteur à combustion interne sont utilisés comme variables de fonctionnement.

4. Procédé selon l'une quelconque des revendications précédentes, **caractérisé en ce que** le choix de la valeur seuil de démarrage et/ou de la valeur seuil d'arrêt se fait de manière progressive ou discrète.

5. Procédé selon l'une quelconque des revendications précédentes, **caractérisé en ce que,** en cas de choix progressif, la valeur seuil de départ et/ou la valeur seuil d'arrêt est/sont déterminée(s) sur la base d'une fonction mathématique qui présente la variable de fonctionnement comme variable d'entrée.

6. Procédé selon l'une quelconque des revendications précédentes, **caractérisé en ce que,** lorsque la variable de fonctionnement passe en dessous d'une seconde valeur de consigne, la valeur seuil de démarrage est réduite d'une seconde valeur de différence de seuil de démarrage, à partir de la valeur de sortie de seuil de démarrage, et/ou **en ce que**, lorsque la variable de fonctionnement passe en dessous de la seconde valeur de consigne, la valeur seuil d'arrêt est réduite d'une seconde valeur de différence de seuil d'arrêt, à partir de la valeur de sortie de seuil d'arrêt.

7. Procédé selon l'une quelconque des revendications précédentes, **caractérisé en ce que,** lorsque la variable de fonctionnement passe en dessous de la première valeur de consigne et/ou de la seconde valeur de consigne, la valeur seuil de démarrage et/ou la valeur seuil d'arrêt sont sélectionnées de sorte que le couple d'entraînement est généré uniquement au moyen du moteur à combustion interne.

8. Procédé selon l'une quelconque des revendications précédentes, **caractérisé en ce qu'**un moteur à combustion interne Otto est utilisé comme moteur à combustion interne.

9. Appareil d'entraînement hybride pour un véhicule automobile, en particulier pour la mise en œuvre du procédé selon l'une quelconque ou plusieurs des revendications précédentes, dans lequel l'appareil d'entraînement hybride présente un moteur à combustion interne générateur de gaz d'échappement et un moteur électrique, dans lequel le moteur à combustion interne et le moteur électrique fournissent respectivement à eux seuls ou au moins à certains moments ensemble un couple d'entraînement, dans lequel l'appareil d'entraînement hybride est réalisé pour démarrer le moteur à combustion interne lorsqu'une variable de demande passe au-dessus d'une valeur seuil de démarrage et pour générer le couple d'entraînement au moins partiellement au moyen du moteur à combustion interne, et lorsque la variable de la demande passe en dessous d'une valeur seuil d'arrêt, pour arrêter le moteur à combustion interne et générer le couple d'entraînement uniquement au moyen du moteur électrique, et dans lequel l'appareil d'entraînement hybride dispose d'un filtre à particules pour filtrer les gaz d'échappement du moteur à combustion interne, dans lequel l'appareil d'entraînement hybride est en outre réalisé pour sélectionner de manière variable la valeur seuil de démarrage et/ou la valeur seuil d'arrêt pour réduire une génération de suie d'un moteur interne en fonction d'une variable de fonctionnement décrivant une température du moteur à combustion interne, **caractérisé en ce que** lorsque la variable de fonctionnement passe en dessous d'une première valeur de consigne, la valeur seuil de départ est réduite d'une première valeur de différence de seuil de départ, à partir d'une valeur de sortie de seuil de départ et/ou **en ce que** lorsque la variable de fonctionnement passe en dessous de la première valeur de consigne, la valeur seuil d'arrêt est réduite d'une première valeur de différence de seuil d'arrêt, à partir d'une valeur de sortie de seuil d'arrêt.
